Europäisches Patentamt

European Patent Office

Office européen des brevets

(11) Veröffentlichungsnummer : **0 111 621 B1**

(12) # EUROPÄISCHE PATENTSCHRIFT

(45) Veröffentlichungstag der Patentschrift :
**18.06.86**

(51) Int. Cl.⁴ : **G 02 C 5/22**

(21) Anmeldenummer : **83104205.6**

(22) Anmeldetag : **29.04.83**

---

(54) **Selbsthemmendes Gelenk.**

---

(30) Priorität : **14.12.82 DE 3246167**

(43) Veröffentlichungstag der Anmeldung :
**27.06.84 Patentblatt 84/26**

(45) Bekanntmachung des Hinweises auf die Patenterteilung : **18.06.86 Patentblatt 86/25**

(84) Benannte Vertragsstaaten :
**AT BE CH DE FR GB IT LI LU NL SE**

(56) Entgegenhaltungen :
**EP-A- 0 001 752**
**FR-A- 1 135 816**
**FR-A- 2 389 794**
**US-A- 3 042 961**
**US-A- 3 110 057**

(73) Patentinhaber : **Firma Carl Freudenberg**
**Höhnerweg 4**
**D-6940 Weinheim/Bergstrasse (DE)**

(72) Erfinder : **Hölzer, Helmut**
**Hegelstrasse 15**
**D-6940 Weinheim (DE)**

(74) Vertreter : **Weissenfeld-Richters, Helga, Dr.**
**Höhnerweg 2**
**D-6940 Weinheim/Bergstrasse (DE)**

Jouve, 18, rue St-Denis, 75001 Paris, France

## Beschreibung

Die Erfindung betrifft ein selbsthemmendes Gelenk, insbesondere für eine Brille, bestehend aus wenigstens zwei aufeinanderliegenden Laschen, die von einer gemeinsamen Bohrung durchdrungen sind, wobei in der Bohrung ein Gelenkbolzen mit einer zwischen diesem und der Bohrung in radialer Richtung zusammengepressten Hülse aus einem elastischen Werkstoff angeordnet ist, wobei der Gelenkbolzen eine kegelig geformte Stirnfläche aufweist.

Auf ein solches Gelenk nimmt EP-A-1752 Bezug. Der Gelenkbolzen steht dabei in axialer Richtung beiderseits in erheblichem Maße über das Ende der Hülse über, was nicht nur in geschmacklicher Hinsicht wenig befriedigend ist, sondern was darüberhinaus auch zu Verletzungen bei einer unaufmerksamen Handhabung führen kann. Die Montage ist außerdem schwierig und beinhaltet mehrere einzelne Arbeitsschritte. Der erste dieser Arbeitsschritte besteht darin, die nur wenige Millimeter im Durchmesser aufweisende Hülse in der durchgehenden Bohrung der zusammengefügten Laschen zu plazieren. Der zugehörige Gelenkbolzen wird anschließend mit einer als Einfädelingshilfe dienenden Spitze versehen. Er wird in die koaxial die Hülse durchdringende Öffnung eingeführt und durchgedruckt, woran sich die Entnahme der wieder freigewordenen Spitze anschließt. Der Montagevorgang ist damit abgeschlossen, stellt jedoch wegen der Kleinheit der einzelnen zusammenzufügenden Teile erhebliche Anforderungen an das mit der Montage betraute Personal. Eine Automatisierung des Montagevorganges ist bisher noch nicht gelungen. Eine nennenswerte Verbreitung bei der Produktion von Massenbrillen hat ein entsprechendes Gelenk noch nicht gefunden.

Der Erfindung liegt die Aufgabe zugrunde, ein selbsthemmendes Gelenk der eingangs angesprochenen Art zu zeigen, das in nennenswertem Maße über die Laschen überstehende Teile nicht aufweist und das einfach zu montieren ist.

Diese Aufgabe wird erfindungsgemäß mit einem selbsthemmenden Gelenk der eingangs genannten Art gelöst, das dadurch gekennzeichnet ist, daß die Hülse über die Stirnfläche übersteht und an dieser zumindest teilweise anliegt, so daß beim Einbringen des Gelenkbolzens und der darauf aufgebrachten Hülse in die Bohrung die Hülse aufgrund der Anlage an der Stirnfläche mehr in die Bohrung gezogen als gedrückt wird.

Bei der vorgeschlagenen Ausführung wird die auf dem Gelenkbolzen angeordnete Hülse gemeinsam mit diesem in die aufnehmende Bohrung der Laschen eingedrückt. Dabei wird die Hülse an ihrem vorderen Ende durch die kegelig ausgeführte Stirnfläche abgestützt, so daß sie in ihrer Gesamtheit mehr in die Bohrung hineingezogen als hineingedrückt wird. Faltenfildungen und ein unkorrekter Sitz werden auf diese Weise zuverlässig vermieden, wobei es ein hervorzuhebenbender Vorteil ist, daß für die praktische Durchführung des gesamten Montagevorganges ein einfaches Druckwerkzeug genügt, beispielsweise eine Presse oder Zange, was die Automatisierung des Montagevorganges außerordentlich erleichtert.

Die Hülse kann die Stirnfläche Gelenkbolzens in ihrer Gesamtheit überdecken, was außer in ästhetischer Hinsicht auch in hygienischer Hinsicht insofern von großem Vorteil ist, als die Hülse aus einem weichelastischen Werkstoff besteht und bei einer entsprechenden Ausführung zugleich der Abpolsterung der Spitze des Gelenkbolzens dient.

Der Gelenkbolzen kann unmittelbar an die Stirnfläche anschließend eine faßartige Verdickung aufweisen. Diese begünstigt den vorstehend beschriebenen Effekt einer auf die Übertragung von Zugkräften beruhenden Montage der Hülse. Bei einer entsprechenden Aufweitung der Bohrung der Laschen im zugehörigen Bereich resultiert außerdem eine besonders zuverlässige Festlegung des Gelenkbolzens in axialer Richtung.

Eine relative Schwenkbewegung zwischen den beiden Laschen des Gelenkes hat regelmäßig eine entsprechende Bewegung zwischen dem Bolzen und der Hülse nicht zur Folge. Der Bolzen und die Hülse nicht zur Folge. Der Bolzen und die Hülse können aus diesem Grunde fest verbunden sein, was die Herstellung und Montage der Hülse auf dem Bolzen sehr erleichtern kann.

Die Hülse besteht bevorzugt aus einem elastomeren Polyurethan, das eine Härte Shore A von 65 bis 85 aufweisen soll. Neben einer besonders guten Abriebbeständigkeit ist in diesem Falle ein guter Reibungskoeffizient gewährleistet, was einem vorzeitigen Nachlassen der Selbsthemmung stark entgegenwirkt.

Der Gelenkbolzen kann an dem der Stirnfläche gegenüberliegenden Ende schraubenkopfähnlich verdickt sein, wobei es im Hinblick auf eine passgenaue Montage allerdings erforderlich ist, daß die Hülse bei dem uneingebauten Gelenkbolzen in einem gewissen axialen Abstand von der zugeordneten Stirnfläche des Schraubenkopfbolzens endet. Die aus dem Einbau resultierende Deformierung der Hülse kann auf diese Weise kompensiert werden und vermag die schließlich erreichte Einbaulage nicht zu beeinträchtigen.

Die Kegelfläche des Gelenkbolzens soll so angeschrägt sein, daß ein einwandfreier Transport der Hülse während der Montage gewährleistet ist. In Abhängigkeit von der Dimensionierung und von der Härte der Hülse können Winkel unterschiedlichster Größe in Frage kommen, wobei jedoch der bevorzugte Bereich zwischen 90 und 150° liegt.

Die mit dem vorgeschlagenen Gelenk erzielten Vorteile bestehen neben einer besonders einfachen Montierbarkeit vor allem in der harmonischen Einfügung der einzelnen Teile in den durch die Laschen des Gelenkes gebildeten Rahmen. Die vorgeschlagene Ausführung ist dadurch ausgezeichnet für eine Verwendung in modischen Brillen geeignet.

Der Gegenstand der vorliegenden Erfindung wird nachfolgend anhand der in der Anlage beigefügten Zeichnungen näher erläutert. Es zeigen :

Figur 1  ein selbsthemmendes Gelenk für eine Brille, das einen im wesentlichen zylindrisch ausgebildeten Gelenkbolzen aufweist.

Figur 2  eine Ausführung entsprechend Figur 1, bei der der Gelenkbolzen unmittelbar anschließend an die kegelige Stirnfläche faßartig aufgeweitet ist.

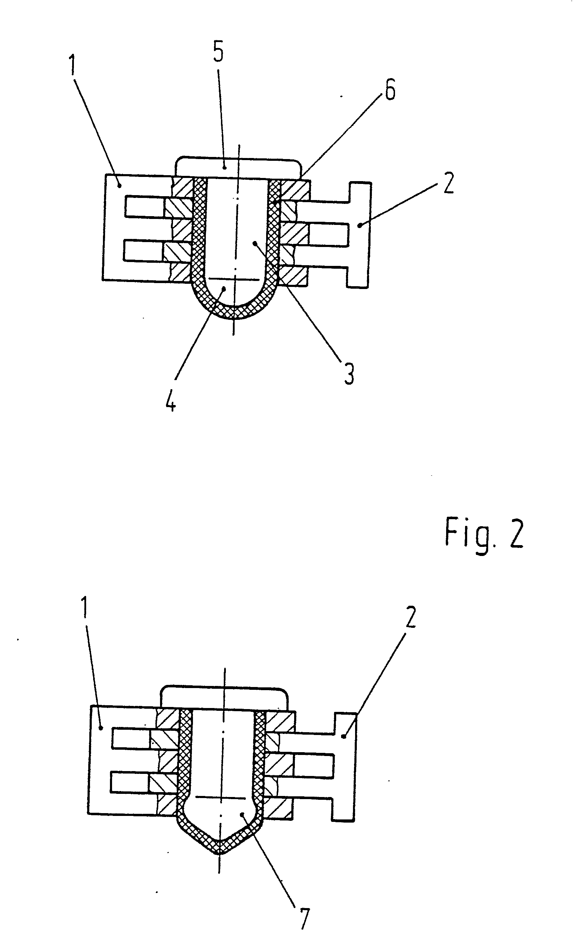

Das in Figur 1 gezeigte selbsthemmende Gelenk besteht aus den beiden relativ zueinander verschwenkbaren Laschenpaaren 1 und 2. Diese sind einerseits mit dem Brillenbügel, andererseits mit der Fassung der Gläser verbunden.

Die beiden Laschenpaare sind senkrecht durchbohrt und einander so zugeordnet, daß sämtliche Öffnungen koaxial übereinander zu liegen kommen. Sie sind von dem Gelenkbolzen 3 durchdrungen, der eine kegelige Stirnfläche 4 mit abgerundeter Spitze aufweist sowie eine fest verbundene Hülse 6 aus elastomerem Polyurethan mit einer Härte Shore A von 65, die die Spitze ganz überdeckt. Der Gelenkbolzen wird nach oben durch eine schraubenkopfähnlich ausgebildete Verdickung 5 abgeschlossen, die einen größeren Durchmesser aufweist als die zugehörige Bohrung der Laschen 1 und 2.

Die Ausführung nach Figur 2 entspricht der vorstehenden Beschreibung, mit dem Unterschied, daß der Gelenkbolzen in dem an die kegelige Stirnfläche 4 anschließenden Bereich faßartig verdickt ist. Eine entsprechende Aufweitung weist auch der im eingebauten Zustand zugehörige Bereich der die Laschen 1, 2 durchdringenden Bohrung auf, woraus eine besonders gute axiale Festlegung des Gelenkbolzens resultiert. Er bedarf dadurch keiner weiteren Sicherung. Durch die gerundete Übergangszone zwischen dem faßartig verdickten Teil und der kegeligen Stirnfläche wird eine Beschädigung der Hülse während des Montagevorgangs, beispielsweise durch Abscherung, verhindert. Eine entsprechende Abrundung ist auch in allen anderen Ausführungen empfehlenswert.

## Patentansprüche

1. Selbsthemmendes Gelenk, insbesondere für eine Brille, bestehend aus wenigstens zwei aufeinanderliegenden Laschen, die von einer gemeinsamen Bohrung durchdrungen sind, wobei in der Bohrung ein Gelenkbolzen mit einer zwischen diesem und der Bohrung in radialer Richtung zusammengepreßten Hülse aus einem elastischen Werkstoff angeordnet ist, und wobei der Gelenkbolzen eine kegelig geformte Stirnfläche aufweist, dadurch gekennzeichnet, daß die Hülse (6) über die Stirnfläche (4) übersteht und an dieser zumindest teilweise anliegt, so daß beim Einbringen des Gelenkbolzens und der darauf aufgebrachten Hülse in die Bohrung die Hülse aufgrund der Anlage an der Stirnfläche mehr in die Bohrung gezogen als gedrückt wird.

2. Gelenk nach Anspruch 1, dadurch gekennzeichnet, daß die Hülse (6) die Stirnfläche (4) in ihrer Gesamtheit überdeckt.

3. Gelenk nach Anspruch 1 bis 2, dadurch gekennzeichnet, daß der Gelenkbolzen (3) unmittelbar an die Stirnfläche (4) zum Bolzenschaft hin anschließend eine faßartige Verdickung aufweist.

4. Gelenk nach Anspruch 1 bis 3, dadurch gekennzeichnet, daß die Hülse (6) und der Bolzen (3) verbunden sind.

5. Gelenk nach Anspruch 1 bis 4, dadurch gekennzeichnet, daß die Hülse (6) aus elastomerem Polyurethan besteht.

6. Gelenk nach Anspruch 1 bis 5, dadurch gekennzeichnet, daß der Gelenkbolzen (3) an dem der Stirnfläche (4) gegenüberliegenden Ende verdickt ist und daß zwischen der Verdickung und der Hülse im nicht eingebauten Zustand ein Abstand vorgesehen ist.

7. Gelenk nach Anspruch 1 bis 6, dadurch gekennzeichnet, daß der Kegel-Öffnungswinkel der Stirnfläche (4) 90 bis 150° beträgt.

8. Gelenk nach Anspruch 1 bis 7, dadurch gekennzeichnet, daß der Gelenkbolzen aus einem in radialer Richtung federnd nachgiebigen Stift besteht.

9. Gelenk nach Anspruch 8, dadurch gekennzeichnet, daß der Stift wenigstens eine sich in axialer Richtung erstreckende Federzunge aufweist.

## Claims

1. A self-retarding hinge, in particular for a pair of glasses, comprising at least two lugs which lie one on top of the other and are penetrated by a common bore, a hinge bolt being arranged in the bore with a sleeve of a flexible material pressed together in radial direction between the hinge bolt and the bore, and the hinge bolt having a conically shaped face, characterised in that the sleeve (6) projects beyond the face (4) and is in contact at least partially with the latter so that, when the hinge bolt and the sleeve attached thereto are introduced into the bore, the sleeve is more drawn than pushed into the bore on account of the contact at the face.

2. A hinge according to claim 1, characterised in that the sleeve (6) covers the face (4) in its entirety.

3. A hinge according to claim 1 or 2, characterised in that the hinge bolt (3) has a barrel-like thickening adjoining directly to the face (4) towards the bolt shank.

4. A hinge according to any of claims 1 to 3, characterised in that the sleeve (6) and the bolt (3) are connected.

5. A hinge according to any of claims 1 to 4, characterised in that the sleeve (6) consists of elastomeric polyurethane.

6. A hinge according to any of claims 1 to 5, characterised in that the hinge bolt (3) is thickened at the end opposite the face (4) and in that a clearance is provided between the thickening and the sleeve in the unfitted state.

7. A hinge according to any of claims 1 to 6, characterised in that the cone apex angle of the face (4) is 90 to 150°.

8. A hinge according to any of claims 1 to 7, characterised in that the hinge bolt consists of a pin which is resiliently compliant in radial direction.

9. A hinge according to claim 8, characterised in that the pin has at least at least one spring blade extending in radial direction.


**Revendications**

1. Charnière à freinage incorporé, en particulier pour des lunettes, constituée d'au moins deux éclisses superposées qui sont traversées par un alésage commun, dans lequel est disposé un axe d'articulation avec une douille en matériau élastique comprimée en direction axiale entre cet axe et l'alésage, l'axe d'articulation présentant une face frontale conique, caractérisée en ce que la douille (6) recouvre la face frontale (4) et prend appui, au moins partiellement, sur celle-ci, si bien qu'au moment de l'introduction de l'axe d'articulation et de la douille qui y est montée dans l'alésage, la douille se trouve davantage tirée que poussée dans l'alésage, grâce à son appui sur la face frontale.

2. Charnière selon la revendication 1, caractérisée en ce que la douille (6) recouvre, en totalité, la surface frontale (4).

3. Charnière selon les revendications 1 et 2, caractérisée en ce que l'axe d'articulation (3) présente une sur-épaisseur en forme de tonneau dans sa partie cylindrique avoisinant immédiatement la face frontale (4).

4. Charnière selon les revendications 1 à 3, caractérisée en ce que la douille (6) et l'axe (3) sont assemblés l'un à l'autre.

5. Charnière selon les revendications 1 à 4, caractérisée en ce que la douille (6) est réalisée en polyuréthane élastomère.

6. Charnière selon les revendications 1 à 5, caractérisée en ce que l'axe d'articulation (3) présente une sur-épaisseur à son extrémité opposée à la face frontale (4) et en ce qu'un espacement est prévu entre la sur-épaisseur et la douille avant le montage.

7. Charnière selon les revendications 1 à 6, caractérisée en ce que l'angle d'ouverture du cône de la face conique (4) est de 90 à 150°.

8. Charnière selon les revendications 1 à 7, caractérisée en ce que l'axe d'articulation est constitué d'une broche présentant une élasticité dans le sens radial.

9. Charnière selon la revendication 8, caractérisée en ce que la broche présente au moins une languette élastique disposée en direction axiale.

0 111 621

Fig. 2